# FASCICULE DE BREVET EUROPEEN

(11) **EP 1 190 616 B1**
(45) Date de publication et mention de la délivrance du brevet: **04.12.2002**
(21) Numéro de dépôt: 01440314.1
(22) Date de dépôt: 24.09.2001
(51) Int. Cl.: A01D 34/73, A01D 34/00

(54) **Tondeuse-Broyeuse**
Mulchmäher
Mulching mower

(30) Priorité: 26.09.2000 FR 0012232
(43) Date de publication de la demande: 27.03.2002
(73) Titulaire: Outils Wolf (Société Anonyme à Directoire et Conseil de Surveillance), 67160 Wissembourg (FR)
(72) Inventeur:
(74) Mandataire: Nuss, Pierre

(56) Documents cités:
- FR-A- 2 312 938
- US-A- 3 797 212
- US-A- 4 083 166
- US-A- 4 205 512
- US-A- 5 197 265
- US-A- 5 210 998
- US-A- 5 435 118
- US-A- 5 465 564
- US-A- 5 765 346

## Description

La présente invention concerne le domaine de la construction de machines d'entretien des pelouses, en particulier pour la tonte de ces dernières, notamment au moyen de tondeuses-broyeuses, et a pour objet une telle tondeuse-broyeuse, selon le préambule de la revendication 1.

La tonte des surfaces engazonnées est généralement effectuée au moyen de tondeuses à gazon ou de tondeuses-broyeuses, ces machines étant de type poussée ou autotractée. La tonte par tondeuses à gazon s'effectue avec ramassage simultané de l'herbe coupée ou avec éjection latérale de ladite herbe coupée et ramassage ultérieur de celle-ci.

Les machines de tonte de l'herbe du type tondeuses-broyeuses sont destinées à réaliser une coupe de l'herbe, suivie immédiatement d'un broyage de l'herbe coupée, qui est rabattue vers le sol pour être épandue entre les brins d'herbe subsistants. Ces machines se présentent sous une forme de tondeuse à gazon à carter fermé munie d'une volute sensiblement torique et de moyens fixés à l'intérieur de ladite volute et formant des obstacles dans la partie supérieure dudit carter, afin de dévier vers le sol l'herbe coupée et soulevée par la lame de coupe. Suite à cette déviation, l'herbe est ramenée dans le champ d'action de la lame de coupe et est broyée par cette dernière en fine particules, qui sont précipitées vers le sol, entre les brins ayant subi la tonte.

Pour éviter une trop grande accumulation d'herbe coupée au sol, notamment en présence d'herbe haute, il a été prévu d'équiper les tondeuses-broyeuses d'un clapet amovible latéral permettant une éjection latérale de l'herbe coupée, éventuellement dans un réceptacle de ramassage ou en andain pour un ramassage ultérieur.

Les dispositifs de tonte connus actuellement pour le broyage simultané de l'herbe présentent, cependant, l'inconvénient de nécessiter, pour une largeur de coupe donnée, une puissance d'entraînement de la lame de coupe supérieure à celle d'une tondeuse à gazon équivalente et de ne pas permettre un ramassage optimal de l'herbe coupée, dans le cas où un tel ramassage est souhaité. En effet, du fait que les obstacles prévus dans la volute ramènent le flux d'herbe coupée vers la lame de coupe, afin de provoquer le broyage de ladite herbe, le moteur d'entraînement de la lame de coupe doit fournir, d'une part, la puissance nécessaire à la coupe et à vaincre les résistances de frottement de la lame sur l'herbe restante et, d'autre part, la puissance nécessaire au broyage de l'herbe coupée, en rotation dans la volute.

En outre, en particulier en présence d'herbe mouillée, il existe un risque de bourrage de la volute par accumulation de celle-ci contre le bord périphérique du carter et contre les obstacles prévus dans la partie supérieure de la volute. De plus, cette conformation de la volute avec les obstacles supérieurs a un effet négatif sur une éjection éventuelle de l'herbe coupée, les obstacles gênant une bonne progression de ladite herbe dans le carter et donc son évacuation.

Par ailleurs, dans la partie centrale du carter s'étendant au-dessus de la lame de coupe, une partie de l'herbe broyée et rabattue par les obstacles est agglomérée par la lame en rotation contre le bas de la partie périphérique interne de la volute, de sorte que le rendement de la machine et son efficacité sont réduits en conséquence.

Enfin, il se pose également un problème d'enfouissement des particules d'herbe broyées entre les brins d'herbe enracinés, qui a pour conséquence un maintien partiel de ces particules en surface, de sorte que l'entretien peut apparaître négligé.

On connaît également, par US-A-5 197 265, une tondeuse-broyeuse constituée par un carter de support d'un moteur d'entraînement d'une lame de coupe guidée dans le carter sous une volute de forme générale semi-torique. Cette machine comporte une partie centrale de carter de section cylindrique, qui est d'une seule pièce avec ledit carter.

Une telle partie cylindrique centrale fixe présente, toutefois, l'inconvénient de permettre une adhérence des particules d'herbe coupée et de favoriser ainsi un colmatage partiel de la volute, ce qui entraîne un effet indésirable sur le broyage des particules qui ne sont plus ramenées vers la lame de coupe pour un broyage complémentaire, ni précipitées sur le sol entre les brins d'herbe subsistants.

Par ailleurs, US-A-5 465 564 décrit un plateau de coupe multi-lames pouvant être utilisé aussi bien pour réaliser un broyage de l'herbe que pour effectuer une éjection latérale. Ce plateau comporte des moyens de mise en turbulence de l'herbe coupée qui contribuent à la précipitation des fragments d'herbe vers le sol et à une prévention des dépôts d'herbe à la périphérie des trajectoires des lames.

Cependant, ce plateau de coupe est mal adapté à une mise en turbulence totale des brins d'herbe, du fait qu'il présente une section transversale angulaire, de sorte que des dépôts éventuels de particules d'herbe dans les parties angulaires ne peuvent quasiment pas être évités, et qu'il se produit également un colmatage partiel du volume s'étendant au-dessus des lames de coupe, ce qui a aussi pour effet d'atténuer les mises en turbulence et donc l'effet de broyage.

La présente invention a pour but de pallier ces inconvénients en proposant une tondeuse-broyeuse, en particulier poussée ou autotractée, permettant d'assurer un broyage efficace de l'herbe coupée, sans risque de colmatage du carter et avec une éventuelle possibilité de récupération de l'herbe coupée dans un réceptacle disposé sur le carter.

A cet effet, la tondeuse-broyeuse, qui est essentiellement constituée par un carter de support d'au moins un moteur d'entraînement, par l'intermédiaire d'un arbre d'entraînement, d'au moins une lame de coupe guidée dans ledit carter, sous une volute de forme générale semi-torique, est caractérisée en ce que le carter est pourvu, d'une part, dans la volute, de moyens de mise en turbulence de l'herbe coupée et, d'autre part, d'une partie centrale de déflexion de l'herbe coupée, sous forme d'une cloche circulaire à section longitudinale cylindrique, conique, ou curviligne, montée sur l'arbre d'entraînement de la lame de coupe ou d'une seule pièce avec ce dernier.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et en coupe suivant A-A de la figure 2 d'une tondeuse-broyeuse conforme à l'invention ;
la figure 2 est une vue en plan et en coupe suivant B-B de la figure 1 ;
la figure 3 est une vue de la tondeuse-broyeuse par le dessous ;
la figure 4 est une vue en perspective de la tondeuse-broyeuse ;
la figure 5 est une vue en élévation latérale et partiellement en coupe au niveau du dispositif de réglage en hauteur des roues, et
la figure 6 est une vue en plan d'un tableau explicatif.

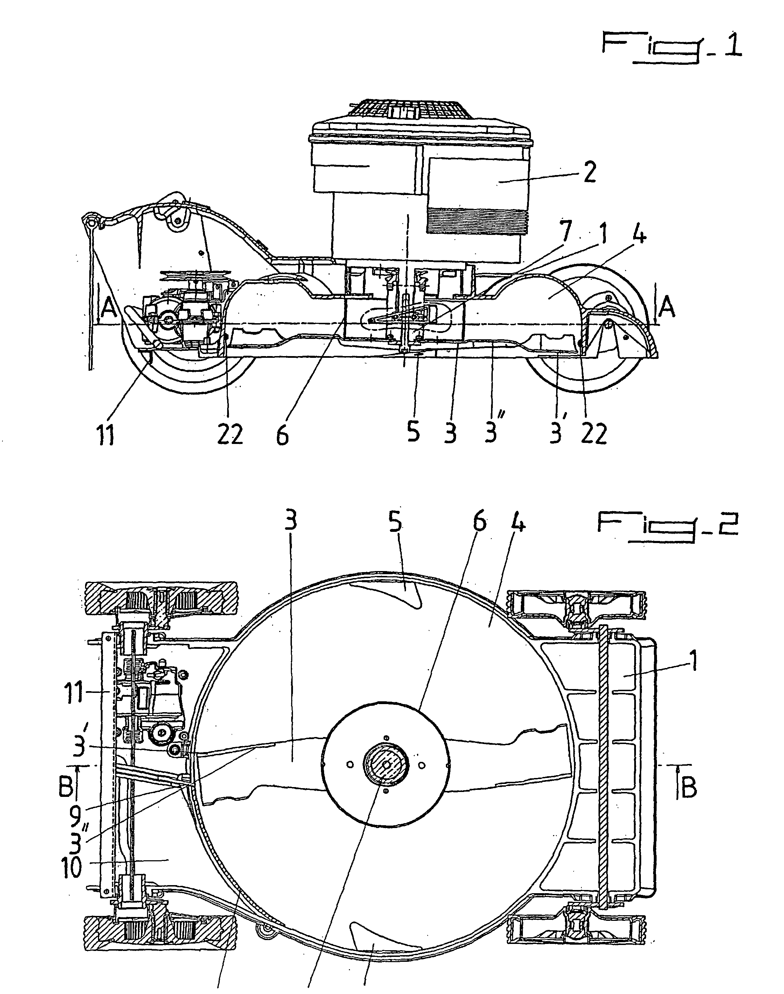

Les figures 1 à 3 des dessins annexés représentent, à titre exemple, une tondeuse-broyeuse, qui est essentiellement constituée par un carter 1 de support d'au moins un moteur 2 d'entraînement d'au moins une lame de coupe 3 guidée dans ledit carter 1, sous une volute 4 de forme générale semi-torique.

Conformément à l'invention, le carter 1 de cette tondeuse-broyeuse est pourvu, d'une part, dans la volute 4, de moyens 5 de mise en turbulence de l'herbe coupée et, d'autre part, d'une partie centrale 6 de déflexion de l'herbe coupée.

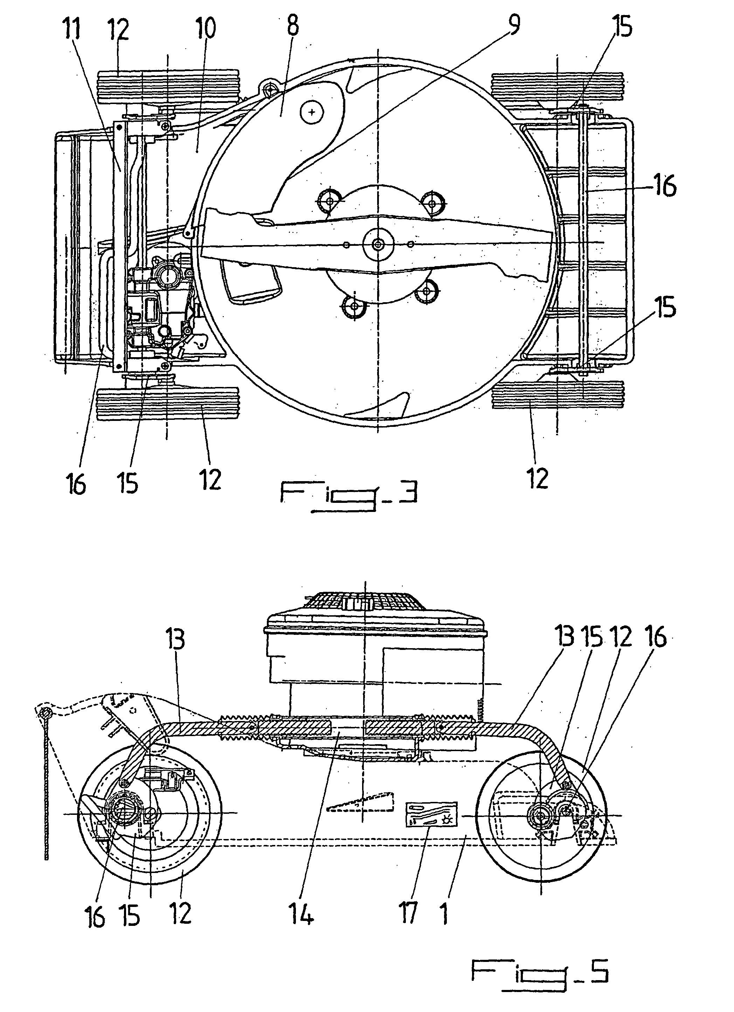

La lame de coupe 3 (figures 1 et 2), montée sur un arbre d'entraînement 7, est de type connu à deux arêtes coupantes 3' et 3" à chaque extrémité, ces arêtes 3' et 3" étant décalées en hauteur et destinées respectivement, l'une, l'arête inférieure 3', à la coupe de l'herbe, et l'autre, l'arête supérieure 3", au broyage de l'herbe en mouvement turbulent dans la volute 4. Les arêtes coupantes inférieures 3' sont disposées aux parties distales des extrémités et les arêtes coupantes supérieures 3" s'étendent en prolongement desdites arêtes inférieures 3', en direction de l'axe médian vertical de la lame de coupe 3.

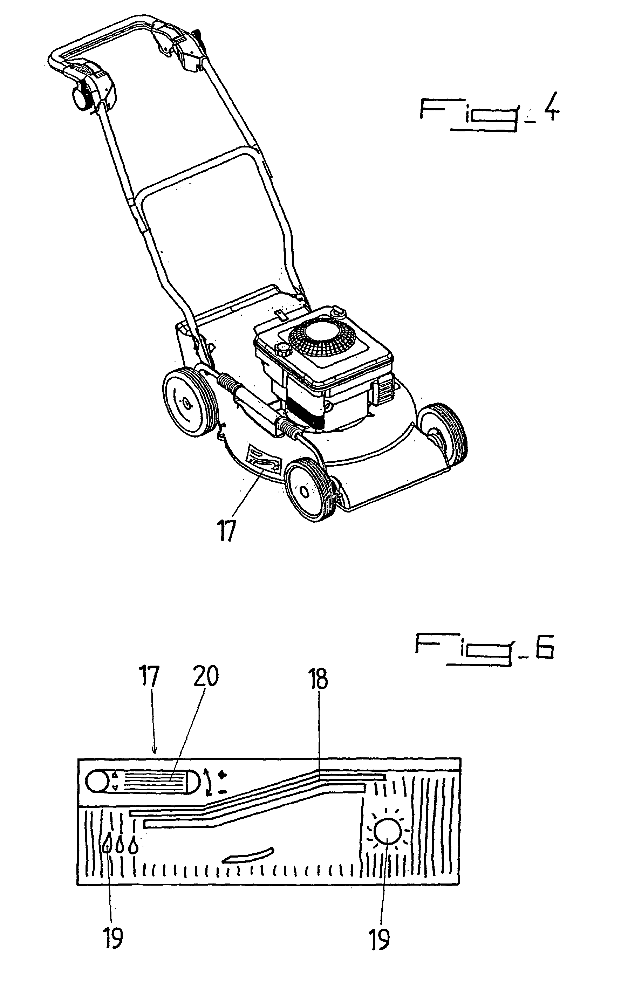

Les moyens 5 de mise en turbulence de l'herbe coupée sont avantageusement sous forme de coins sensiblement tétraédriques (figures 2 et 3) fixés contre le bord intérieur périphérique de la volute 4 du carter ou d'une seule pièce avec ce dernier. De préférence, et comme représenté aux figures 2 et 3 des dessins annexés, les coins sensiblement tétraédriques formant les moyens 5 de mise en turbulence de l'herbe coupée sont au moins au nombre de deux et diamétralement opposés et présentent des surfaces supérieure et verticale interne concaves. Il est également possible de prévoir un plus grand nombre de tels coins répartis à l'intérieur de la volute 4, pour assurer un effet de turbulence optimal. Ainsi, les moyens 5 de mise en turbulence de l'herbe coupée perturbent le flux d'air rotatif engendré dans la volute 4 par la lame de coupe 3 et le rendent turbulent en contrariant la force centrifuge, de sorte que l'herbe coupée par les arêtes inférieures 3' se trouvant dans ledit flux d'air est soumise à un mouvement de rotation dans un plan vertical de ladite volute. Il en résulte que cette herbe coupée est ramenée davantage dans le champ d'action de la lame de coupe 3 pour y être broyée par les arêtes supérieures 3".

En outre, ces coins formant les moyens 5 de mise en turbulence de l'herbe coupée empêchent une accumulation de celle-ci le long de la périphérie inférieure du carter 1.

Selon une autre caractéristique de l'invention, la volute 4 peut être complétée, comme le montre notamment la figure 1 des dessins annexés, par une ceinture intérieure 22 à section transversale semi-circulaire. Une telle ceinture intérieure 22 permet une amélioration du broyage et de l'élimination de l'herbe sur la périphérie de la volute 4 du carter 1.

La partie centrale 6 de déflexion de l'herbe coupée (figures 1 à 3) est avantageusement sous forme d'une cloche circulaire à section longitudinale cylindrique, conique, ou curviligne, montée sur l'arbre d'entraînement 7 de la lame de coupe ou d'une seule pièce avec ce dernier.

La cloche formant la partie centrale 6 de déflexion de l'herbe coupée s'étend entre la partie interne centrale du carter 1, délimitée par le périmètre interne du tore formant la volute 4, et la lame de coupe 3. Ainsi, l'herbe coupée et ramenée dans un mouvement turbulent vers le centre du carter 1, dans la volute 4, est ramenée vers la cloche formant la partie centrale de déflexion 6. Cette cloche étant en rotation rapide, il en résulte que l'herbe coupée venant en son contact est immédiatement déviée vers la partie médiane de la volute 4 pour y être broyée par les arêtes 3"" de la lame de coupe 3.

En outre, du fait de son encombrement et de sa masse, la cloche formant la partie centrale 6 participe à l'inertie de l'équipage mobile constitué par l'arbre d'entraînement 7 et la lame de coupe 3 et favorise un meilleur rendement de coupe et de broyage. De plus, la rotation de la cloche empêche toute adhérence des brins d'herbe et donc un auto-nettoyage du rebord interne de la volute 4.

Selon une autre caractéristique de l'invention, et comme le montre la figure 1 des dessins annexés, l'arbre d'entraînement 7 de la lame de coupe 3 est avantageusement monté légèrement incliné vers l'avant par rapport à un axe vertical du plan médian vertical de la tondeuse-broyeuse. Il en résulte que la lame de coupe 3, solidaire de l'arbre 7, évolue dans un plan légèrement incliné par rapport à l'horizontale, de sorte que la lame 3 n'est au contact de l'herbe à couper et de celle restante que dans la partie avant du carter 1 et passe au-dessus du niveau de l'herbe restante dans la partie arrière du carter 1.

Ainsi, la lame ne frotte plus à l'arrière, mais participe davantage à l'action de broyage, une hauteur plus importante de l'espace torique de la volute 4 étant parcourue par les arêtes 3' et 3" de la lame de coupe 3, les arêtes 3' participant à cette action dans la partie arrière du carter 1. En outre, du fait du moindre frottement de la lame 3, l'énergie de coupe nécessaire, à largeur de coupe égale, peut être réduite, de sorte que la puissance motrice peut également être réduite et, en corollaire, les nuisances sonores correspondantes.

Conformément à une autre caractéristique de l'invention, représentée aux figures 2 et 3 des dessins annexés, le carter 1 peut être pourvu, dans sa partie arrière, d'une trappe amovible 8 coopérant avec une ouverture 9 prévue dans la volute 4 et fixée au carter 1 par l'intermédiaire de vis (non représentées), cette trappe 8 reliant l'ouverture 9 à un conduit d'éjection arrière 10. Une telle trappe amovible 8 est destinée à permettre une éjection de l'herbe coupée lorsque les conditions d'un broyage efficace ne peuvent plus être assurées, par exemple lorsque l'herbe est trop haute. De plus, la prévision d'une éjection arrière autorise la mise en place éventuelle d'un réceptacle de réception à l'arrière, dans l'encombrement en largeur de la machine. Enfin, en position de service sur le carter 1, la trappe 8 assure une continuité parfaite de la volute 4 et n'induit donc aucune nuisance de fonctionnement.

Afin de favoriser le dépôt et l'enfouissement des particules d'herbe broyée entre les brins d'herbe ayant subi la coupe, le carter 1 comporte, en outre, dans sa partie arrière, une traverse de raclage 11 profilée en forme de cornière, dont l'une des ailes s'étend transversalement en dessous du plan contenant la base de la volute 4, sur toute la largeur d'épandage de ladite herbe broyée (figures 1 à 3). Une telle traverse 11 permet un raclage de la surface et assure un enfouissement de l'herbe coupée par une vibration des brins subsistants et ainsi un agrandissement momentané de l'espace entre ces derniers, de sorte que les particules broyées peuvent tomber jusqu'au pied des brins et qu'il ne subsiste aucune trace d'herbe coupée sur le gazon ainsi traité.

Selon une autre caractéristique de l'invention, la tondeuse-broyeuse est munie, en outre, d'un dispositif de réglage en hauteur des roues 12 équipant le carter 1, ce dispositif étant sous forme d'un dispositif centralisé agissant simultanément sur les quatre roues 12 (figure 5). Ce dispositif de réglage en hauteur des roues 12 est avantageusement constitué par deux leviers opposés 13 reliés chacun par une extrémité filetée à un tube-écrou 14 et par leur autre extrémité à un flasque excentrique 15 de support d'une roue 12, ledit flasque excentrique 15 étant monté mobile en rotation sur le carter 1 et étant relié à un flasque identique 15 de support de la roue 12 du côté opposé, par l'intermédiaire d'un arbre de transmission 16 traversant le carter 1.

Ainsi, par un vissage ou un dévissage des extrémités correspondantes des leviers 13 dans le tube-écrou 14, il est possible de faire pivoter simultanément les flasques 15 de support des roues 12 dans le sens d'un déplacement de ces dernières vers le haut ou vers le bas par rapport au plan inférieur du carter 1. Il en résulte un réglage parfaitement parallèle de la hauteur du carter par rapport au sol et donc de la hauteur de coupe, permettant d'optimiser le résultat de la tonte et le broyage de l'herbe coupée.

Conformément à une autre caractéristique de l'invention et comme le montrent les figure 4 et 6 des dessins annexés, le carter 1 est avantageusement pourvu, sur au moins une de ses faces latérales, d'un tableau 17 d'aide au réglage. Un tel tableau 17 comporte essentiellement une courbe de hauteur de coupe 18 en fonction des conditions climatiques 19 et une représentation schématique 20 du dispositif de réglage en hauteur des roues 12, avec indication du sens de réglage suivant lesdites conditions climatiques et de la position correspondante de coupe du couteau 3. Ainsi, il suffit à l'utilisateur, après avoir disposé la tondeuse dans l'herbe à couper, de constater les conditions climatiques au moment de la tonte et d'actionner, en fonction de la hauteur de coupe à adopter en tenant compte desdites conditions climatiques et des indications portées sur le tableau explicatif 17, le dispositif de réglage en hauteur des roues 12 au moyen du tube-écrou 14.

La courbe de hauteur de coupe 18 correspondant aux conditions climatiques régnant au moment de la tonte sera amenée au niveau supérieur de l'herbe à couper par réglage de la hauteur du carter 1 en actionnant le dispositif de réglage en hauteur des roues 12 dans le sens d'une montée ou d'une descente du carter 1. Ce réglage permettra une position idéale plus haute correspondant à une tonte par temps pluvieux, représentée dans la partie gauche de la figure 6, et une possibilité d'évolution en continu vers une position idéale plus basse correspondant à une tonte par temps sec, représentée dans la partie droite de la figure 6. Par temps pluvieux, il est, en effet, nécessaire de couper une hauteur d'herbe relativement faible pour assurer l'enfouissement de l'herbe coupée, alors que par temps sec une hauteur d'herbe plus importante peut être coupée et broyée sans risque de bourrage de la volute 4 et sans qu'il subsiste de trace d'herbe coupée sur le gazon ainsi traité.

Toutefois, pour tenir compte du moindre risque de jaunissement d'un gazon tondu à une faible hauteur, par temps pluvieux, il suffira de procéder à une tonte par paliers successifs pour assurer un broyage et un enfouissement corrects des particules d'herbe broyée entre les brins.

De même, par beau temps sec, pour assurer une certaine fraîcheur aux racines, qui est notamment possible grâce à une plus grande hauteur des brins d'herbe restant, la hauteur de coupe peut être adaptée en déplaçant le carter 1 pour faire coïncider la courbe de hauteur de coupe 18 avec le niveau de l'herbe à couper dans une zone plus éloignée de celle correspondant à la position haute extrême basse du carter 1, pour faire coïncider le niveau de la hauteur de coupe 18 dans une zone intermédiaire vers le centre de la figure 6 et correspondant à une position plus relevée du carter 1.

Ainsi, l'utilisateur dispose de tous les éléments nécessaires pour effectuer un réglage optimal de la hauteur de coupe. Bien entendu, grâce au tube-écrou 14 du dispositif de réglage en hauteur des roues 12, l'utilisateur peut procéder à un réglage fin continu entre les positions extrêmes de hauteur du carter 1.

Grâce à l'invention, il est possible de réaliser une tondeuse-broyeuse permettant d'assurer une tonte optimale et un broyage efficace de l'herbe coupée, sans risque de colmatage du carter et en prévoyant une éventuelle possibilité de récupération de l'herbe coupée dans un réceptacle disposé sur le carter.

En outre, la tondeuse-broyeuse conforme à l'invention permet, à performances égales, la mise en oeuvre d'un moteur d'entraînement moins puissant et pouvant donc générer moins de nuisances, notamment sonores.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Tondeuse-broyeuse, essentiellement constituée par un carter (1) de support d'au moins un moteur (2) d'entraînement, par l'intermédiaire d'un arbre d'entraînement (7), d'au moins une lame de coupe (3) guidée dans ledit carter (1), sous une volute (4) de forme générale semi-torique, **caractérisée en ce que** le carter (1) est pourvu, d'une part, dans la volute (4), de moyens (5) de mise en turbulence de l'herbe coupée et, d'autre part, d'une partie centrale (6) de déflexion de l'herbe coupée, sous forme d'une cloche circulaire à section longitudinale cylindrique, conique, ou curviligne, montée sur l'arbre d'entraînement (7) de la lame de coupe (3) ou d'une seule pièce avec ce dernier.

2. Tondeuse-broyeuse, suivant la revendication 1, **caractérisée en ce que** les moyens (5) de mise en turbulence de l'herbe coupée sont sous forme de coins sensiblement tétraédriques fixés contre le bord intérieur périphérique de la volute (4) du carter ou d'une seule pièce avec ce dernier.

3. Tondeuse-broyeuse, suivant la revendication 2, **caractérisée en ce que** les coins sensiblement tétraédriques formant les moyens (5) de mise en turbulence de l'herbe coupée sont au moins au nombre de deux et diamétralement opposés et présentent des surfaces supérieure et verticale interne concaves.

4. Tondeuse-broyeuse, suivant l'une quelconque des revendications 2 et 3, **caractérisée en ce qu'**il est prévu plus de deux coins répartis à l'intérieur de la volute (4).

5. Tondeuse-broyeuse, suivant la revendication 1, **caractérisée en ce qu'**elle est complétée par une ceinture intérieure (22) à section transversale semi-circulaire.

6. Tondeuse-broyeuse, suivant la revendication 1, **caractérisée en ce que** la cloche formant la partie centrale (6) de déflexion de l'herbe coupée s'étend entre la partie interne centrale du carter (1), délimitée par le périmètre interne du tore formant la volute (4), et la lame de coupe (3).

7. Tondeuse-broyeuse, suivant la revendication 1, **caractérisée en ce que** l'arbre d'entraînement (7) de la lame de coupe (3) est monté légèrement incliné vers l'avant par rapport à un axe vertical du plan médian vertical de la tondeuse-broyeuse.

8. Tondeuse-broyeuse, suivant la revendication 1, **caractérisée en ce que** le carter (1) est pourvu, dans sa partie arrière, d'une trappe amovible (8) coopérant avec une ouverture (9) prévue dans la volute (4) et fixée au carter (1) par l'intermédiaire de vis, cette trappe (8) reliant l'ouverture (9) à un conduit d'éjection arrière (10).

9. Tondeuse-broyeuse, suivant la revendication 1, **caractérisée en ce que** le carter (1) comporte, en outre, dans sa partie arrière, une traverse de raclage (11) profilée en forme de cornière, dont l'une des ailes s'étend transversalement en dessous du plan contenant la base de la volute 4, sur toute la largeur d'épandage de l'herbe broyée.

10. Tondeuse-broyeuse, suivant la revendication 1, **caractérisée en ce qu'**elle est munie, en outre, d'un dispositif de réglage en hauteur des roues (12) équipant le carter (1), ce dispositif étant sous forme d'un dispositif centralisé agissant simultanément sur les quatre roues (12).

11. Tondeuse-broyeuse, suivant la revendication 10, **caractérisée en ce que** le dispositif de réglage en hauteur des roues (12) est constitué par deux leviers opposés (13) reliés chacun par une extrémité filetée à un tube-écrou (14) et par leur autre extrémité à un flasque excentrique (15) de support d'une roue (12), ledit flasque excentrique (15) étant monté mobile en rotation sur le carter (1) et étant relié à un flasque identique (15) de support de la roue (12) du côté opposé, par l'intermédiaire d'un arbre de transmission (16) traversant le carter (1).

12. Tondeuse-broyeuse, suivant l'une quelconque des revendications 1, 10 et 11, **caractérisée en ce que** le carter (1) est pourvu, sur au moins une de ses faces latérales, d'un tableau (17) d'aide au réglage.

13. Tondeuse-broyeuse, suivant la revendication 11, **caractérisée en ce que** le tableau (17) comporte essentiellement une courbe de hauteur de coupe (18) en fonction des conditions climatiques (19) et une représentation schématique (20) du dispositif de réglage en hauteur des roues (12), avec indication du sens de réglage suivant lesdites conditions climatiques et de la position correspondante de coupe du couteau (3).

## Patentansprüche

1. Mulchmäher, im wesentlichen bestehend aus einem Gehäuse (1), das mindestens einen Motor (2) trägt, der über eine Antriebswelle (7) zumindest ein Schneidmesser (3) antreibt, das in dem Gehäuse (1) unter einer im wesentlichen halbwulstförmigen Volute (4) geführt ist,
**dadurch gekennzeichnet,**
**dass** das Gehäuse (1) einerseits in der Volute (4) Mittel (5) aufweist, um das geschnittene Gras in Turbulenz zu bringen und andererseits einen zentralen Bereich (6) aufweist, um das geschnittene Gras abzulenken, und zwar in Form einer kreisförmigen, im Längsschnitt zylindrischen, konischen oder kurvigen Glocke, die auf der Antriebswelle (7) des Schneidmessers (3) montiert oder ein Teil derselben ist.

2. Mulchmäher nach Anspruch 1,
**dadurch gekennzeichnet,**
**dass** die Mittel (5) für das in Turbulenz bringen des abgeschnittenen Grases die Form von im wesentlichen tetraedrischen Winkeln aufweisen, die an der inneren Umfangswand der Volute (4) des Gehäuses angeordnet oder ein Stück desselben sind.

3. Mulchmäher nach Anspruch 2,
**dadurch gekennzeichnet,**
**dass** die im wesentlichen tetraedrischen Winkel, die die Mittel (5) zum in Turbulenz bringen des abgeschnittenen Grases bilden, zumindest in zweifacher Anzahl und einander gegenüberliegend angeordnet sind und obere und vertikale innere konkave Flächen aufweisen.

4. Mulchmäher nach einem der Ansprüche 2 und 3,
**dadurch gekennzeichnet,**
**dass** mehr als zwei Winkel über die Innenseite der Volute (4) verteilt sind.

5. Mulchmäher nach Anspruch 1,
**dadurch gekennzeichnet,**
**dass** er durch einen inneren Ring (22) mit halbkreisförmigem Querschnitt komplettiert ist.

6. Mulchmäher nach Anspruch 1,
**dadurch gekennzeichnet,**
**dass** die Glocke, die den Zentralbereich (6) zum Ablenken des abgeschnittenen Grases bildet, sich zwischen dem zentralen inneren Teil des Gehäuses (1), begrenzt durch den inneren Umfang des die Volute (4) bildenden Torus und dem Schneidmesser (3) erstreckt.

7. Mulchmäher nach Anspruch 1,
**dadurch gekennzeichnet,**
**dass** die Antriebswelle (7) des Schneidmessers (3) leicht nach vorn geneigt montiert ist in Bezug auf eine Vertikalachse einer vertikalen Medianebene des Mulchmähers.

8. Mulchmäher nach Anspruch 1,
**dadurch gekennzeichnet,**
**dass** das Gehäuse (1) an seinem hinteren Bereich eine abnehmbare Klappe (8) aufweist, die mit einer in der Volute (4) angeordneten Öffnung (9) zusammenwirkt und mittels Schrauben am Gehäuse (1) fixiert ist, wobei diese Klappe (8) die Öffnung (9) mit einem hinteren Auswurfkanal (10) verbindet.

9. Mulchmäher nach Anspruch 1,
**dadurch gekennzeichnet,**
**dass** das Gehäuse (1) außerdem an seinem hinteren Bereich eine Abstreif-Traverse (11) in Form eines Winkelprofils aufweist, dessen einer Schenkel sich quer unterhalb der Ebene erstreckt, die die Basis der Volute (4) bildet, und zwar über die gesamte Abwurfbreite des zerkleinerten Grases.

10. Mulchmäher nach Anspruch 1,
**dadurch gekennzeichnet,**
**dass** er außerdem eine Vorrichtung zur Höhenverstellung der Räder (12) des Gehäuses (1) aufweist, wobei diese Vorrichtung als Zentralvorrichtung ausgebildet ist, die gleichzeitig auf alle vier Räder (12) wirkt.

11. Mulchmäher nach Anspruch 10,
**dadurch gekennzeichnet,**
**dass** die Vorrichtung zur Höhenverstellung der Räder (12) aus zwei gegenüberliegenden Hebeln (13) besteht, die jeweils durch ein mit Gewinde versehenes Ende mit einer Schraubhülse (14) und durch ihr anderes Ende mit einem exzentrischen Flansch (15) zur Halterung eines Rades (12) verbunden sind, wobei der genannte exzentrische Flansch (15) verdrehbar an dem Gehäuse (1) gelagert und mit einem identischen Flansch (15) zur Halterung des gegenüberliegenden Rades (12) verbunden ist, und zwar mittels einer das Gehäuse (1) durchquerenden Transmissionswelle (16).

12. Mulchmäher nach einem der Ansprüche 1, 10 und 11,
**dadurch gekennzeichnet,**
**dass** das Gehäuse (1) zumindest an einer seiner Seitenwände ein Tableau (17) zur Unterstützung der Verstellung aufweist.

13. Mulchmäher nach Anspruch 12,
**dadurch gekennzeichnet,**
**dass** das Tableau (17) im wesentlichen eine Kurvenbahn (18) für die Schnitthöhe in Abhängigkeit von den klimatischen Verhäitnissen (19) und eine schematische Darstellung (20) für die Vorrichtung zur Höhenverstellung der Räder (12) aufweist mit Angabe der Verstellrichtung gemäß den genannten klimatischen Verhältnissen und der korrespondierenden Position des Schneidmessers (3).

## Claims

1. Mower-crusher consisting essentially of a housing (1) that supports at least one drive motor (2) which, via a driveshaft (7), drives at least one cutting blade (3) that is guided within the housing (1), under a volute (4) of general semi-toric shape, **characterised in that** the housing (1) is provided, on the one hand in the volute (4) with means (5) to stir up the cut grass, and on the other hand with a central portion (6) which deflects the cut grass and which has the shape of a circular bell with a cylindrical, conical or curvilinear longitudinal section mounted on the driveshaft (7) of the cutting blade (3) or made as one piece with the latter.

2. Mower-crusher according to Claim 1, **characterised in that** the means (5) to dtir up the cut grass are in the form of essentially tetrahedral wedges attached against the peripheral inside edge of the volute (4) of the housing or made as one piece with the latter.

3. Mower-crusher according to Claim 2, **characterised in that** the essentially tetrahedral wedges forming the means (5) to stir up the cut grass are at least two in number, positioned diametrically opposite one another and having concave upper and vertical inside surfaces.

4. Mower-crusher according to either of Claims 2 and 3, **characterised in that** more than two wedges distributed inside the volute (4) are provided.

5. Mower-crusher according to Claim 1, **characterised in that** it is completed by an internal belt (22) of semi-circular cross-section.

6. Mower-crusher according to Claim 1, **characterised in that** the bell forming the central part (6) which deflects the cut grass extends between the central inside part of the housing (1) delimited by the internal perimeter of the torus forming the volute (4) and the cutting blade (3).

7. Mower-crusher according to Claim 1, **characterised in that** the driveshaft (7) of the cutting blade (3) is mounted inclined slightly towards the front relative to a vertical axis of the median vertical plane of the mower-crusher.

8. Mower-crusher according to Claim 1, **characterised in that** the housing (1) is provided at the back with a removable trap (8) that cooperates with an opening (9) in the volute (4) and is fixed to the housing (1) by screws, the said trap (8) connecting the opening (9) to a rear ejection duct (10).

9. Mower-crusher according to Claim 1, **characterised in that** the housing (1) also comprises at the back a transverse scraper (11) profiled in the form of an angle-iron, one arm of which extends transversely below the plane containing the base of the volute (4) across the full scatter width of the crushed grass.

10. Mower-crusher according to Claim 1, **characterised in that** it is also provided with a device for adjusting the height of the wheels (12) fitted to the housing (1), the said device being in the form of a centralised device that acts simultaneously on all four wheels (12).

11. Mower-crusher according to Claim 10, **characterised in that** the device for adjusting the height of the wheels (12) consists of two opposed levers (13) each connected at a threaded end to a tube-nut (14) and at the other end to an eccentric sideplate (15) that supports a wheel (12), the said eccentric sideplate (15) being mounted and able to rotate on the housing (1) and being connected to an identical wheel (12) supporting sideplate (15) on the opposite side via a transmission spindle (16) that extends across the housing (1).

12. Mower-crusher according to any of Claims 1, 10 and 11, **characterised in that** the housing (1) is provided on at least one of its lateral faces with a diagram (17) to assist adjustment.

13. Mower-crusher according to Claim 11, **characterised in that** the diagram (17) comprises essentially a curve of cutting height (18) as a function of the climatic conditions (19) and a schematic representation (20) of the wheel (12) height adjustment device, indicating the adjustment direction according to the said climatic conditions and the corresponding cutting position of the blade (3).
